(19)

Europäisches
Patentamt
European
Patent Office
Office européen
des brevets

(11) **EP 1 906 206 A1**

(12) **EUROPEAN PATENT APPLICATION**

(43) Date of publication:
**02.04.2008 Bulletin 2008/14**

(51) Int Cl.:
**G01S 13/58** *(2006.01)*    **G01S 13/72** *(2006.01)*
**G01S 13/34** *(2006.01)*    **G01S 13/93** *(2006.01)*

(21) Application number: **07018383.5**

(22) Date of filing: **19.09.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **28.09.2006 JP 2006265231**

(71) Applicant: **Mazda Motor Corporation**
**Fuchu-cho**
**Aki-gun**
**Hiroshima, Hiroshima 730-8670 (JP)**

(72) Inventors:
• **Oka, Takuji**
  **Aki-gun**
  **Hiroshima 730-8670 (JP)**

• **Ohmura, Hiroshi**
  **Aki-gun**
  **Hiroshima 730-8670 (JP)**
• **Okazaki, Haruki**
  **Aki-gun**
  **Hiroshima 730-8670 (JP)**
• **Kobayashi, Sei**
  **Aki-gun**
  **Hiroshima 730-8670 (JP)**
• **Nakagami, Takashi**
  **Aki-gun**
  **Hiroshima 730-8670 (JP)**
• **Seto, Takayuki**
  **Aki-gun**
  **Hiroshima 730-8670 (JP)**

(74) Representative: **Müller-Boré & Partner**
**Patentanwälte**
**Grafinger Strasse 2**
**81671 München (DE)**

(54) **Obstacle detecting apparatus, method and computer program product for vehicle**

(57)    There are provided a radar device **1** that transmits a frequency modulation-continuous wave (FM-CW) and outputs an up-beat frequency and a down-beat frequency, a pairing processing section **2** that conducts pairing of the up-beat frequency and the down-beat frequency at specified sampling intervals, a target-object detecting section **3** that detects target objects around the vehicle, obtaining a distance from the vehicle to the target object and a relative speed between the vehicle and the target object based on the up-beat frequency and down-beat frequency that are paired, and a prediction processing section **4** that obtains a prediction data for each target object for a next sampling timing. The pairing processing section **2** conducts the pairing with priority to a specified target object that has a high certainty of the prediction data. Thereby, the pairing of the up-beat and down-beat frequencies can be conducted precisely and quickly.

**FIG. 1**

**Description**

The present invention relates to an obstacle detecting apparatus, method and computer program product for a vehicle that detects an obstacle in front of the vehicle, and more specifically, relates to an obstacle detecting apparatus and method of a vehicle that uses a radar of a frequency modulation-continuous wave (FM-CW).

Recently, various types of obstacle detecting apparatus that detects the obstacle in front of the vehicle have been proposed for a vehicle traveling control or a vehicle safe traveling with a collision prediction or the like. According to the obstacle detecting apparatus, the radar transmits the millimeter-wave forward to detect the obstacle in front, for example, and receives its reflecting wave. Generally, the radar device of the frequency modulation-continuous wave (FM-CW) has been well used because of its properly light and compact structure (see Japanese Patent Laid-Open Publication No. 2004-198438, for example).

The above-described FM-CW radar transmits the frequency modulation-continuous wave and outputs an up-beat frequency and a down-beat frequency. Herein, the up-beat frequency is a difference between a transmitting frequency and a receiving frequency in a going-up section of the transmitting frequency by a frequency modulation. The down-beat frequency is a difference between the transmitting frequency and the receiving frequency in a going-down section of the transmitting frequency by the frequency modulation. The location of the target object or the relative speed between the vehicle and the target object can be obtained based on these up-beat frequency and the down-beat frequency.

Herein, in a case where there exist a plurality of target objects, the radar output contains the up-beat frequencies and the down-beat frequencies that correspond to the plural target objects, respectively. Hence, the pairing (selection) of the both frequencies for each target object may be necessary to be conducted by selecting a specified up-beat frequency and a specified down-beat frequency that correspond to the specified target object.

When the obstacles in front of the vehicle are detected, typically many target objects thereof are detected at the same time. And, even if the target objects are stationary, the relative location of these objects from the vehicle or the like may change in accordance with the traveling (proceeding) of the vehicle. Thus, the obstacle detecting apparatus of a vehicle needs to conduct a correct pairing (selection) of its correspondent up-beat frequency and down-beat frequency to each target object in a very short time at each sampling timing.

In the conventional obstacle detecting apparatus of a vehicle using the FM-CW radar, the pairing of the up-beat frequency and the down-beat frequency was conducted to all of target objects uniformly.

Accordingly, there occurred a case in which the pairing of the up-beat frequency and the down-beat frequency was conducted even to some particular target objects, such as a so-called ghost, that might not be detected for the next sampling timing, before conducting the pairing to the target object that had a high certainty of its detection at the predicted location. As a result, the inappropriate pairing was conducted in advance, so the necessary pairing to the target object having the high certainty of its detection at the predicted location could not conducted surely. And, in the event that this inappropriate pairing happened, for example, all of the pairing of the up-beat frequency and the down-beat frequency were restarted (tried again).

The present invention has been devised in view of the above-described problem, and an object of the present invention is to allow conducting the pairing of the up-beat frequency and the down-beat frequency precisely and quickly.

This object is solved by the features of the independent claims. Preferred embodiments of the present invention are subject of the dependent claims.

According to the present invention, there is provided an obstacle detecting apparatus for a vehicle, comprising a radar or electro-magnetic device to transmit a frequency modulation-continuous wave and output an up-beat frequency and a down-beat frequency, the up-beat frequency being a difference between a transmitting frequency and a receiving frequency in a going-up section of the transmitting frequency by a frequency modulation, the down-beat frequency being a difference between the transmitting frequency and the receiving frequency in a going-down section of the transmitting frequency by the frequency modulation, a pairing device to conduct pairing or associating or selecting of the up-beat frequency and the down-beat frequency at specified (predetermined or predeterminable) sampling intervals, a target-object detecting device to detect target objects around the vehicle, obtaining a distance from the vehicle to the target object and a relative speed between the vehicle and the target object based on the up-beat frequency and the down-beat frequency that are paired or associated or selected, and a predicting device to obtain a prediction data for each target object for a next sampling timing, wherein the pairing device is configured to conduct the pairing with priority to a specified target object that has a high certainty of the prediction data obtained by the predicting device. Thereby, the pairing is conducted with priority to the specified target object that has the high certainty of the prediction data. Accordingly, the pairing of the up-beat frequency and the down-beat frequency can be conducted precisely and quickly.

According to an embodiment of the present invention, the pairing device is configured to divide the target objects into a high or first class in which the target object has a relatively high certainty of the prediction data and a low or second class in which the target object has a relatively low certainty of the prediction data, conduct the pairing to the target object in the high class first, and then conduct the pairing to the target object in the low class by selecting the up-beat frequency and the down-beat frequency that are not paired yet. Thereby, in the event that the inappropriate pairing to the target object in the low class happens after the pairing to the target object in the high class has been conducted, only the pairing to the target object in the low class can be restarted. Namely, it may not be necessary to conduct the pairing to the target object in the high class again. Accordingly, the time for the pairing can be shortened properly and a more efficient pairing can be conducted thus leading to a reduced computational power needed.

According to another embodiment of the present invention, the pairing device is configured to divide the target objects into classes based on the number of sampling in which the target object that is actually detected substantially corresponds to the prediction data. Thereby, the classification of target objects can be done easily by using the correspondence number.

According to another embodiment of the present invention, the pairing device is configured to conduct the pairing to the target objects having the prediction data by selecting the up-beat frequency and the down-beat frequency that provide the highest correspondence of the target object to the prediction data. Thereby, the pairing of the target object having the prediction data can be conducted precisely.

According to another embodiment of the present invention, the prediction data obtained by the predicting device includes a distance from the vehicle to the target object and a relative speed between the vehicle and the target object for the next sampling timing. Thereby, the degree of correspondence of the pairing of the up-beat frequency and the down-beat frequency to the prediction data of the target object can be evaluated based on the distance and the relative speed of the target object.

According to another embodiment of the present invention, the pairing device is configured to conduct the pairing to the target object having the prediction data first and then conduct the pairing to a new target object by selecting the up-beat frequency and down-beat frequency that are not paired yet. Thereby, in the event that the inappropriate pairing to the new target object happens after the pairing to the target object having the prediction data has been conducted, it may not be necessary to conduct the pairing to the target object having the prediction data again. Accordingly, the time for the pairing can be shortened properly.

According to another embodiment of the present invention, the pairing device is configured to conduct the pairing to the new target object based on a receiving direction and a receiving intensity of respective receiving waves of the up-beat frequency and the down-beat frequency. Thereby, the pairing of the up-beat frequency and the down-beat frequency that are not paired yet can be conducted even to the new target object that has no prediction data.

According to the present invention, there is provided an obstacle detecting method for a vehicle, in particular for use in an obstacle detecting apparatus for a vehicle according to the invention or a preferred embodiment thereof, comprising the steps of transmitting a frequency modulation-continuous wave and obtaining an up-beat frequency and a down-beat frequency, the up-beat frequency being a difference between a transmitting frequency and a receiving frequency in a going-up section of the transmitting frequency by a frequency modulation, the down-beat frequency being a difference between the transmitting frequency and the receiving frequency in a going-down section of the transmitting frequency by the frequency modulation, conducting pairing of the up-beat frequency and the down-beat frequency at specified sampling intervals, detecting target objects around the vehicle, by obtaining a distance from the vehicle to the target object and a relative speed between the vehicle and the target object based on the up-beat frequency and down-beat frequency that are paired, and obtaining a prediction data for each target object for a next sampling timing, wherein the pairing conducted is configured to be done by conducting the pairing with priority to a specified target object that has a high certainty of the prediction data obtained.

According to an embodiment of the present invention, the conducting of pairing comprises dividing the target objects into a high class in which the target object has a relatively high certainty of the prediction data and a low class in which the target object has a relatively low certainty of the prediction data, conduct the pairing to the target object in said high class first, and then conduct the pairing to the target object in said low class by selecting the up-beat frequency and the down-beat frequency that are not paired yet, and/or wherein the conducting of pairing comprises dividing the target objects into classes based on the number of sampling in which the target object that is actually detected substantially corresponds to the prediction data.

According to the present invention, there is provided a computer program product, in particular embodied on a computer-readable storage medium, as a signal or as a data stream, comprising computer-readable instructions which, when loaded and executed on a suitable system, perform the steps of an obstacle detecting method for a vehicle of the invention or a preferred embodiment thereof.

Other features, aspects, and advantages of the present invention will become apparent from the following description which refers to the accompanying drawings.

FIG. **1** is a block diagram of an obstacle detecting device of a vehicle according to an embodiment of the present invention.

FIG. **2A** is a graph showing a transmitting wave and a receiving wave of a radar device, and FIG. **2B** is a graph showing beat waves.

FIG. **3A** is a graph showing a transmitting wave and receiving waves of a plurality of target objects, FIG. **3B** is a graph showing results of Fourier transformation of a beat wave in a going-up section of a transmitting frequency, and FIG. **3C** is a graph showing results of Fourier transformation of a beat wave in a going-down section of the transmitting frequency.

FIG. **4** is a flowchart of processing of a pairing processing section.

FIG. **5** is a flowchart of detailed pairing processing.

FIG. **6A** is sampling data schematically shown, and FIG. **6B** is prediction data schematically shown.

FIG. **7** is data of up-beat frequencies and down-beat frequencies of a target object in a high certainty class, a target object in a low certainty class, and a new target object, which are to be paired at pairing processing stages.

FIG. **8** is a flowchart of detailed pairing processing.

FIG. **9** is a flowchart of detailed pairing processing.

Hereinafter, a preferred embodiment of an obstacle detecting device and method of a vehicle according to the present invention will be described referring to the accompanying drawings. It should be understood that even though embodiments are separately described, single features thereof may be combined to additional embodiments.

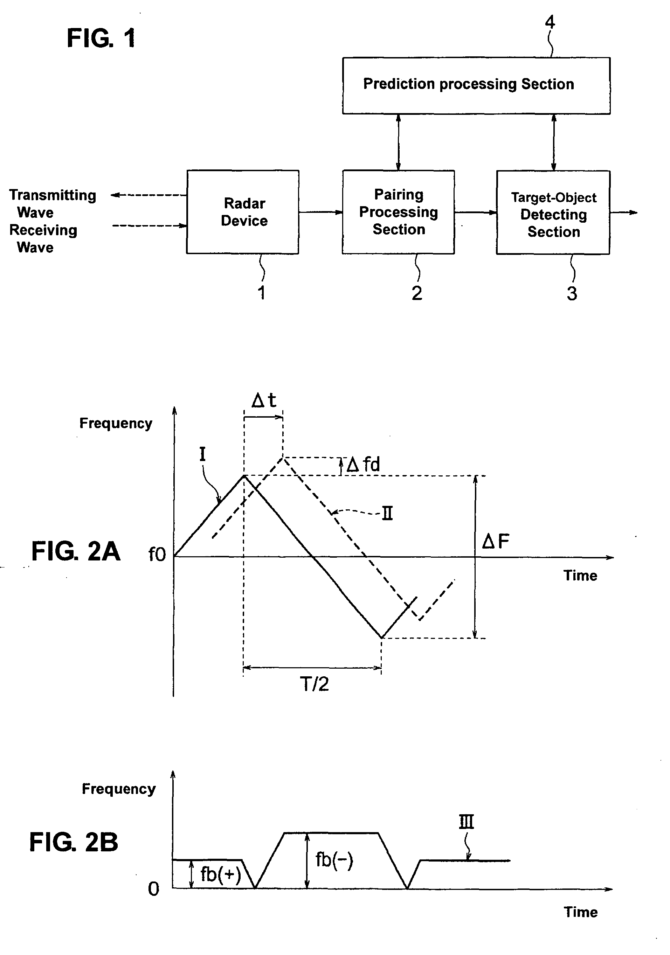

First, the obstacle detecting apparatus of a vehicle of the present embodiment will be described referring to a block diagram of FIG. **1**. The obstacle detecting apparatus comprises, as shown in FIG. **1**, a radar device **1**, a pairing processing section **2** that conducts pairing or associating or selecting of an up-beat frequency and a down-beat frequency at specified (predetermined or predeterminable) sampling intervals, a target-object detecting section **3** that detects target objects around the vehicle, obtaining a distance from the vehicle to the target object and a relative speed between the vehicle and the target object based on the up-beat frequency and down-beat frequency that are paired, a prediction processing section **4** that obtains a prediction data for each target object for a next sampling timing.

Herein, respective functions of the above-described pairing processing section **2,** target-object detecting section **3** and prediction processing section **4** can be carried out by an IC chip or computer programs executed by a computer, for example. The above-described specified sampling intervals means an interval of a sampling time of the radar device **1**, which preferably is about 100 milliseconds, for example.

The radar device **1** transmits a frequency modulation-continuous wave (FM-CM) of a millimeter wave and outputs the up-beat frequency and the down-beat frequency.

FIG. **2A** shows a graph of a transmitting wave and a receiving wave of the radar device **1**. The axis of abscissas of the graph indicates the time, and the axis of ordinates of the graph indicates the frequency. The frequency of the transmitting wave oscillates, repeating its going-up and going-down movement, with a center frequency f0 and a half frequency T/2 within an amplitude of frequency modulation ∆F, as shown by a solid line **I** in FIG. **2A**. As shown by a broken line **II** in FIG. **2A**, the frequency of the receiving wave is also modulated like the transmitting wave.

Herein, the receiving wave may be delayed from the transmitting wave by a delay time ∆t that depends on or is related to a distance from the vehicle to a target object that reflects the transmitting wave. And, the frequency of the receiving wave may be shifted from the frequency of the transmitting wave by a Doppler shift ∆fd that depends on the relative speed between the vehicle and the target object. When the target object is approaching the vehicle, the frequency of the receiving wave becomes higher than that of the transmitting wave. Thereby, there exists a frequency difference between the transmitting wave and the receiving wave as shown by the solid line **I** and the broken line **II**.

FIG. **2B** shows an up-beat frequency fb(+) and a down-beat frequency fb(-). The axis of abscissas of the graph indicates the time, and the axis of ordinates of the graph indicates the frequency. The up-beat frequency is a difference between the transmitting frequency and the receiving frequency in a going-up section of the transmitting frequency by the frequency modulation. The down-beat frequency is a difference between the transmitting frequency and the receiving frequency in a going-down section of the transmitting frequency by the frequency modulation. In an example shown by a line **III** in FIG. **2B**, the down-beat frequency is higher than the up-beat frequency. This corresponds to a case where the target object is approaching.

The distance R from the vehicle to the target object may be obtained by the up-beat frequency fb(+) and the down-beat frequency fb(-) based on the following equation (1).

$$R = \{fb(+) + fb(-)\} \cdot C/(8T \cdot \Delta F) \text{ - - - } (1)$$

Herein, C indicates the velocity of light. T and ∆F indicate the frequency of frequency modulation and the amplitude of frequency modulation, respectively, as shown in FIG. **2A**.

The relative speed V between the vehicle and the target object may be obtained by the up-beat frequency fb(+) and the down-beat frequency fb(-) based on the following equation (2).

$$V = \{fb(-) - fb(+)\} \cdot C/(4 \cdot f0) \text{ - - - (2)}$$

Herein, f0 indicates the center frequency of frequency modulation as shown in FIG. **2A**.

When the radar device **1** transmits the millimeter wave substantially forward, the transmitting wave is reflected by various target objects. Not only vehicles that travel in front of the vehicle or travel in the opposite lane toward the vehicle but some guide rails, electric poles and the like may reflect the transmitting wave. Accordingly, the radar device **1** may receive reflected waves from various objects at the same time.

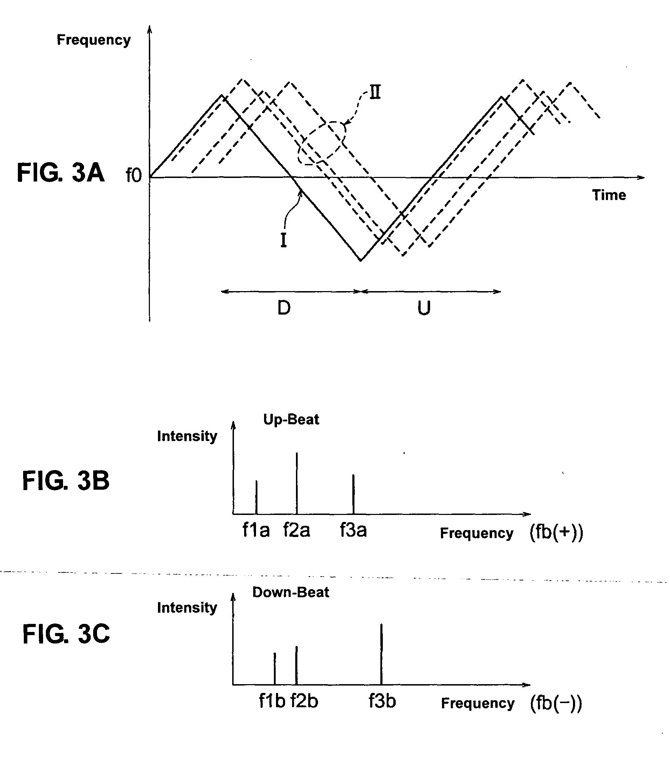

A graph of FIG. **3A** shows the transmitting wave and the receiving waves of a plurality of target objects. The axis of abscissas of the graph indicates the time, and the axis of ordinates of the graph indicates the frequency. A plurality of reflected waves return as shown by the broken line **II** with respect to a single transmitting shown by the solid line **I** in FIG. **3A**. In FIG. **3A**, the reflected waves returning from different objects are shown separately just for convenience. Actually, these may be overlapped, so the plural reflected waves may show irregular and complex shapes. Hence, respective waves of the up-beat frequency and the down-beat frequency in FIG. **2B** may show irregular shapes actually.

Herein, in order to separate the up-beat frequency and the down-beat frequency for each target object, the Fourier transformation preferably is conducted to the waves of these frequencies.

A graph of FIG. **3B** schematically shows results of the Fourier transformation of a beat wave in the going-up section **U** of the transmitting frequency. A graph of FIG. **3C** schematically shows results of the Fourier transformation of a beat wave in a going-down section **D** of the transmitting frequency. Each axis of abscissas of these graphs indicates the frequency, and each axis of ordinates of these graphs indicates an intensity. In an example shown in FIG. **3B**, three up-beat frequencies f1a, f2a, f3a are outputted. In an example shown in FIG. **3C,** three down-beat frequencies f1b, f2b, f3b are outputted.

In order to calculate the distance and the relative speed for each target object, it is necessary to select and pair the up-beat frequency and the down-beat frequency for each target object. For example, by selecting the one among the three up-beat frequencies f1a, f2a, f3a of FIG. **3B** and the one among three down-beat frequencies f1b, f2b, f3b of FIG. **3C,** respectively, it may be necessary to make three pairs of pairing (selection).

Herein, the pairing processing section **2** conducts the pairing of the up-beat frequency and the down-beat frequency with priority to a specified (predetermined or predeterminable) target object that has a high certainty of the prediction data obtained by the prediction processing section **4**.

In order to do so, the pairing processing section **2** of the present embodiment is configured to preferably divide the target objects into a high class in which the target object has a relatively high certainty of the prediction data and a low class in which the target object has a relatively low certainty of the prediction data as a premise of its pairing processing. Specifically, this classification preferably is done based on the number of sampling in which the target object that is actually detected substantially corresponds to the prediction data. Herein, the target object that has a specified (predetermined or predeterminable) factor or more (preferably three times or more) of its correspondence sampling number is considered as the one in the high certainty class, while the target object that has less than the specified (predetermined or predeterminable) factor (preferably twice or less) of its correspondence sampling number is considered as the one in the low certainty class, for example.

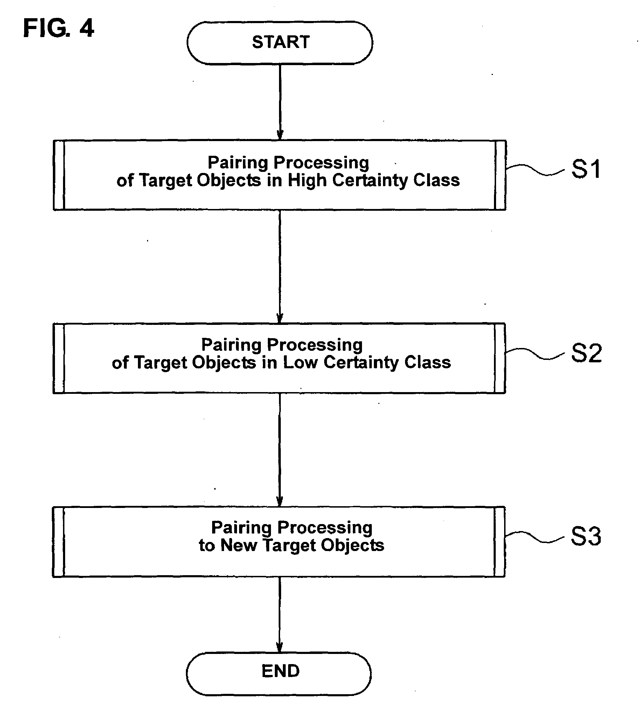

As shown in a flowchart of FIG. **4**, the pairing processing is conducted to the target objects in the high certainty class (step **S1**) first. Then, the pairing processing is conducted to the target objects in the low certainty class (step **S2**). Finally, the pairing processing is conducted to the new target objects (step **S3**).

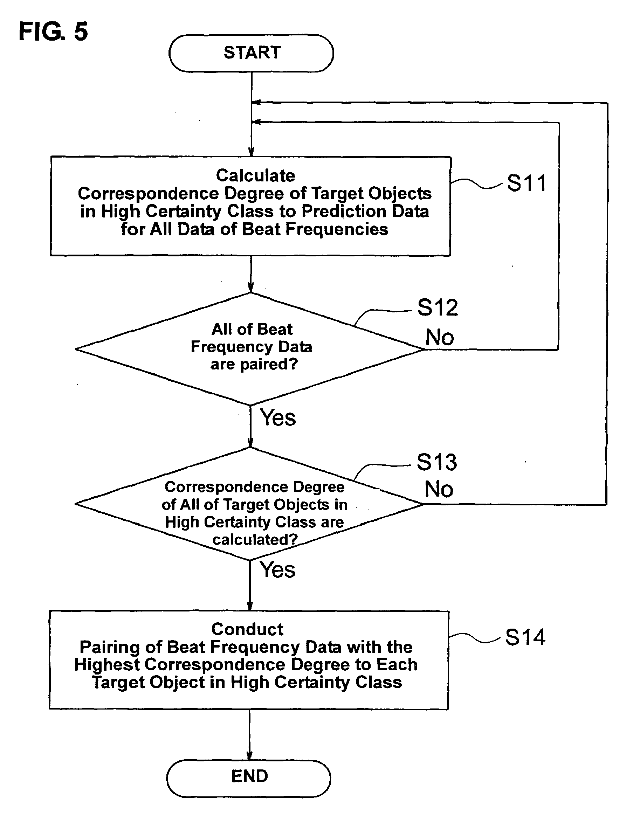

Hereinafter, the specific pairing processing to the target objects in the high certainty class of the step **S1** of FIG. **4** will be described referring to a flowchart of FIG. **5**. First, a degree of the correspondence of the target objects in the high certainty class to the prediction data is calculated for all data of the beat frequencies that are stored in a memory (step **S11**).

In the present embodiment, this correspondence degree preferably is calculated by an evaluation function ε shown by the following equation (3). This evaluation function ε has parameters of receiving power P, beat frequency F, receiving angle (direction) Θ, distance R to the target object, relative speed V of the target object as follows. And, a difference between the data at the present sampling timing (sampling data) and the prediction data is obtained for each parameter, and formalization and weighting are conducted for each parameter.

$$\varepsilon = Ap\,(PUPn - PUPm)\,/\,Pmax + Ap\,(PDWn - PDWm)\,/\,Pmax + Af\,(FUPn - FUPm)\,/\,Fmax + Af\,(PDWn - PDWm)\,/\,Fmax + A\theta\,(\Theta n - \Theta m)\,/\,\Theta max + Ar\,(Rn - Rm)\,/\,Rmax + Av\,(Vn - Vm)\,/\,Vmax \text{ - - - (3)}$$

Herein, n indicates the prediction data based on data at the previous sampling timings or the data at the previous sampling timing, and m indicates the data at the present sampling timing (sampling data).

Further, PUP indicates the receiving power of the up-beat frequency, and PDW indicates the receiving power of the down-beat frequency. FUP indicates the up-beat frequency, and FDW indicates the down-beat frequency. $\Theta$ indicates the receiving angle (direction), R indicates the distance, and V indicates the relative speed.

Also, A indicates a parameter of a load or weight (dimensionless). Thus, Ap indicates the weighting of the receiving power, Af indicates the weighting of the beat frequency, A$\theta$ indicates the weighting of the receiving angle, Ar indicates the weighting of the distance, and Av indicates the weighting of the speed.

Herein, the parameters of the distance and the relative speed of the target object in the high certainty class are sufficiently predictable. Therefore, it may be preferable that the distance and the relative speed be weighted for the pairing with respect to the target object in the high certainty class. For example, it may be preferable to set that Ap = Af = A$\theta$ = 0.5 and Ar = Av = 1.0.

Moreover, Pmax, Fmax, $\Theta$max, Rmax and Vmax indicate parameters for formalization, respectively. These are values for formalizing the weights of the parameters forming the evaluation function $\varepsilon$, which show the maximum value of the respective parameters. Herein, the formalization parameters may be included in the load or weight parameters A.

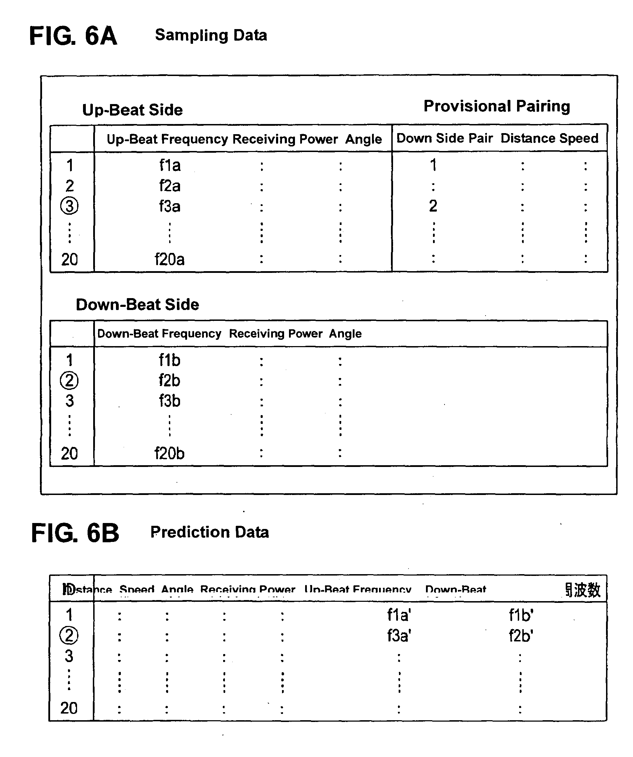

FIG. **6A** shows the sampling data and FIG. **6B** shows the prediction data that are to be used as the parameter of the evaluation function $\varepsilon$. These data is stored in the memory not illustrated. Although the memory is not shown in FIG. **1**, there may be provided a memory device that is different from the block shown in FIG. **1**, or this memory may be provided in the block.

The sampling data is comprised of data on the up-beat side shown at the top of FIG. **6A** and data on the down-beat side shown at the bottom of FIG. **6A**. The up-beat-side data comprises up-beat frequencies f1a - f20a of Nos. 1 - 20. The down-beat-side data comprises down-beat frequencies f1b - f20b of Nos. 1 - 20. For each of the up-beat frequencies (f1a - f20a) and the down-beat frequencies (f1b - f20b), the "receiving power" and the "angle" are stored.

The prediction data includes the "distance", "speed", "angle", "receiving power", "up-beat frequency" and "down-beat frequency" for each of the target objects (ID1 - ID20) as shown in FIG. **6B.** A portion of indication of the value data of the respective parameters is omitted in FIGS. **6A, 6B.**

For the above-described "distance" and "speed" of the prediction data shown in FIG. **6B,** the distance from the vehicle to the target object and the relative speed between the vehicle and the target object that are obtained by the calculation based on the beat frequencies at the previous sampling timing may be preferably used. Also, for the "angle" and "receiving power" of the prediction data, the values at the previous sampling timing or values that are predicted from these values may be used. For the "up-beat frequency" and "down-beat frequency" of the prediction data, the values that are obtained by calculation based on the distance and the speed may be used or the up-beat frequency and the down-beat frequency at the previous sampling timing may be stored and used.

In case of conducting the pairing to the target objects in the high certainty class, the evaluation function $\varepsilon$ is calculated for pairing of all of the up-beat and down-beat frequencies that are obtained from the Fourier transformation (step **S12** of FIG. **5**).

For the sampling data shown in FIG. **6A,** provisional pairing of each of the up-beat frequencies f1a - f20a of Nos. 1 - 20 to all of the down-beat frequencies f1b - f20b of Nos. 1 - 20 is conducted in order. Thereby, the pairing among all of the beat frequencies can be conducted with priority to the target objects in the high certainty class.

Herein, when the provisional pairing is conducted, the frequencies may be paired in order from the one of No. 1, or the pairing of the up-beat and down-beat frequencies that have similar values of the receiving power and the angle may be conducted with priority.

Then, the correspondence degree of the prediction data and the sampling data for the all target objects in the high certainty class is calculated as described above (step **S13** of FIG. **5**). In a case where the four target objects (ID1 - ID4) among the twenty target objects (ID1 - ID20) that have the prediction data shown in FIG. **6B** are in the high certainty class, the calculation of the correspondence degree is conducted to these four target objects.

Subsequently, the pairing (selection) of the up-beat frequency data and the down-beat frequency data in which the correspondence degree is the highest is conducted to each of the four target objects in the high certainty class (ID1 - ID4) (step **S14** of FIG. **5**). In the example shown in FIGS. **6A, 6B,** for example, the pairing of the prediction data of the target object ID2 that provides the highest correspondence degree is the beat frequencies of the up-beat frequency f3a of No. 3 and the down-beat frequency f2b of No. 2.

Herein, the pairing in which the correspondence degree of the prediction data of the target object is the highest is the one that provides the minimum value of the evaluation function $\varepsilon$ as described. In a case where the value of the evaluation function $\varepsilon$ is a specified (predetermined or predeterminable) value or greater, it is considered that the pairing of the beat frequencies with respect to its target object has not detected at this sampling timing or iteration.

Next, after the pairing to the target objects in the high certainty class is complete, the pairing processing is conducted to the target objects in the low certainty class by selecting the rest of the up-beat and down-beat frequencies that are not paired (the step **S2** of FIG. **4**).

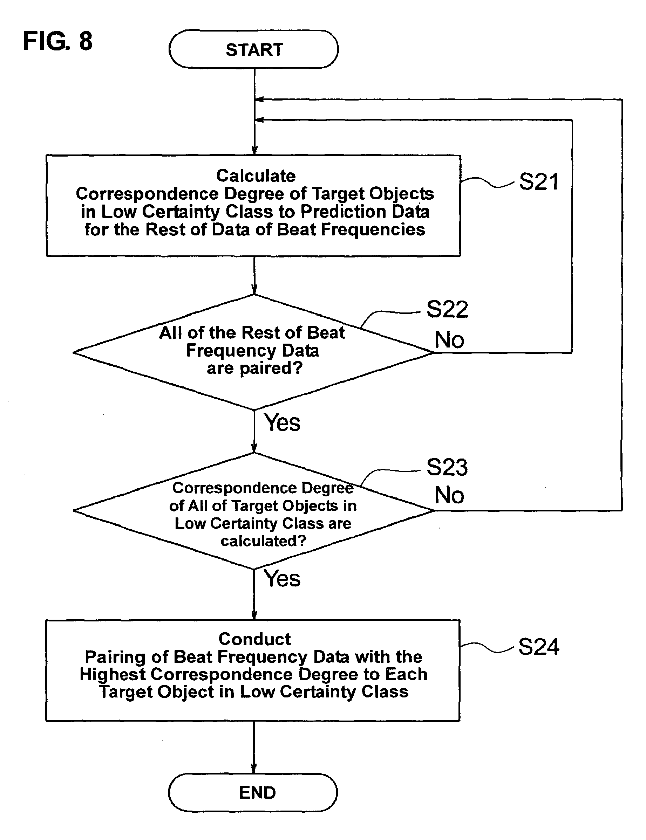

The pairing processing to the target objects in the low certainty class of the step **S2** of FIG. **4** will be described referring to a flowchart of FIG. **8**. At first, the correspondence degree of the target objects in the high certainty class is calculated for all data of the beat frequencies that are stored in the memory (step **S21** of FIG. **8**).

The correspondence degree of the target objects in the low certainty class is also calculated by the evaluation function ε of the above-described equation (3). Herein, the correspondence number of the prediction data regarding the target objects in the low certainty class is rather low and the parameters of the distance and the relative speed of these target objects are not sufficiently predictable, so there is little difference in reliability among the parameters. Therefore, it may be preferable that each parameter with respect to the target objects in the low certainty class have the same weighting. For example, it may be preferable to set that Ap = Af = Aθ = Ar = Av = 1.0.

In case of conducting the pairing to the target objects in the low certainty class, the evaluation function ε is calculated for pairing of the rest of the up-beat and down-beat frequencies that are obtained from the Fourier transformation but do not correspond to the target objects in the high certainty class (step **S22** of FIG. **8**).

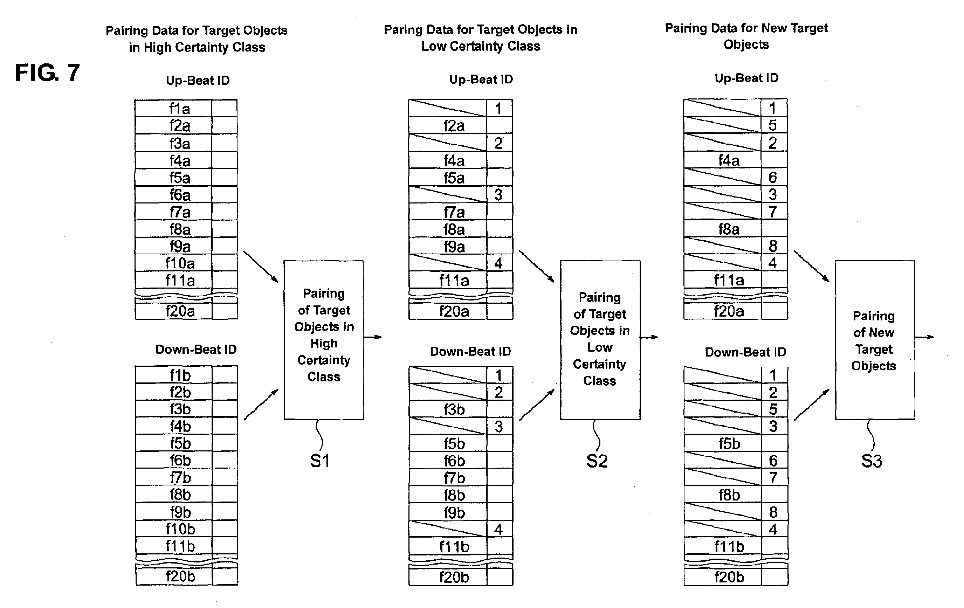

FIG. **7** shows an example of the up-beat frequencies and down-beat frequencies of the target objects in the high certainty class, the target objects in the low certainty class, and the new target objects, which are to be paired at pairing processing stages. A content of the memory that stores the data of the up-beat frequencies (f1a - f20a) and the down-beat frequencies (f1b - f20b) with respect to the target objects in the high certainty class is schematically shown at the left of FIG. **7**. All of these data are to be paired for the target objects in the high certainty class.

A content of the memory that stores the data of the up-beat frequencies and the down-beat frequencies with respect to the target objects in the low certainty class is schematically shown at the center of FIG. **7**. In this example shown in FIG. **7**, the data of the up-beat frequencies f1a, f3a, f6a, f10a and the down-beat frequencies f1b, f2b, f4b, f10b that are selected through the pairing for the target objects in the high certainty class are excluded for the data to be paired for the target objects in the low certainty class.

Then, the correspondence degree of the prediction data and the sampling data for the target objects in the low certainty class is calculated as described above (step **S23** of FIG. **8**). If the four target objects (ID5 - ID8) are the ones in the low certainty class among the twenty target objects (ID1 - ID20) having the prediction data shown in FIG. **6B,** the calculation of the correspondence degree is conducted to these four target objects.

Next, the pairing (selection) of the up-beat and down-beat frequencies in which the correspondence degree is the highest is conducted to each of the four target objects (ID5 - ID8) in the low certainty class (step **S24** of FIG. **8**). Herein, the pairing in which the correspondence degree of the prediction data of the target object is the highest is the one that provides the minimum value of the evaluation function ε as described. In a case where the value of the evaluation function ε is a specified (predetermined or predeterminable) value or greater, it is considered that the pairing of the beat frequencies with respect to its target object has not detected at this sampling timing.

Next, after the pairing to the target objects in the high certainty class and the target objects in the low certainty class is complete, the pairing processing is conducted to the new target objects by selecting the rest of the up-beat and down-beat frequencies that are not paired (the step **S3** of FIG. **4**).

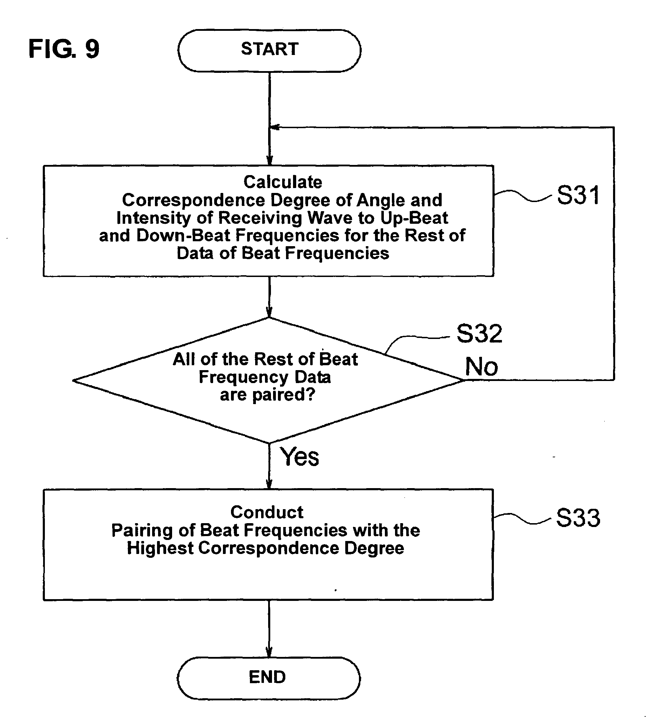

The pairing processing of the new target objects of the step **S3** of FIG. **4** will be described referring to a flowchart of FIG. **9**.

There is no prediction data that corresponds for the pairing of the new target objects. Therefore, the pairing based on the continuity of the prediction data cannot be conducted. Thus, in the present embodiment, the pairing of the new target objects preferably is conducted based on the receiving direction (receiving angle) and the intensity (receiving power) of the receiving waves of the up-beat frequency and the down-beat frequency (step **S31** of FIG. **9**). Namely, the pairing of the beat frequencies that have the highest correspondence degree with respect to the receiving angle and the receiving power is conducted (selected), and then indication numbers (ID number) for the new target objects are applied to these.

In case of conducting the pairing to the new target objects, the correspondence degree of the receiving angle and the receiving power is calculated for pairing of the rest of the up-beat and down-beat frequencies that are obtained from the Fourier transformation, but do not correspond to the target objects in the high certainty and the low certainty class. (step **S32** of FIG. **9**).

The calculation of the correspondence degree in this step may be the sum of a weighted difference between the receiving angle of the up-beat frequency and the receiving angle of the down-beat frequency and a weighted difference between the receiving power of the up-beat frequency and the receiving power of the down-beat frequency.

A content of the memory that stores the data of the up-beat frequencies and the down-beat frequencies with respect to the new target objects is schematically shown at the right of FIG. **7**. In this example shown in FIG. **7**, the data of the up-beat frequencies f1a - f3a, f5a - f7a, f9a, f10a and the down-beat frequencies f1b - f4b, f6b, f7b, f9b, f10b that are selected through the pairing for the target objects in the high certainty class and the target objects in the low certainty class are excluded for the data to be paired for the new target objects.

Then, the correspondence degree of the receiving angle and the receiving power with respect to the rest of the pairing of the up-beat frequency and the down-beat frequency is calculated (step **S32** of FIG. **9**).

Next, the pairing (selection) of the up-beat and down-beat frequencies in which the correspondence degree is the highest is conducted (step **S33** of FIG. **9**). Herein, in a case where the correspondence degree is a specified (predetermined or predeterminable) value or greater, it is considered that the pairing of the beat frequencies with respect to its target object has not detected at this sampling timing.

Thereby, the target-object detecting section **3** calculates the distance and the relative speed of the target objects based on the pairing information by the pairing processing section **2**. The calculated distance and relative speed become the distance and relative speed of the target object ID2 at the present sampling timing or iteration. The prediction processing section **4** calculates the prediction data of the target objects for the next sampling timing based on the information obtained by the pairing processing section **2** and the target-object detecting section **3**.

Accordingly, there are provided a radar device **1** that transmits a frequency modulation-continuous wave (FM-CW) and outputs an up-beat frequency and a down-beat frequency, a pairing processing section **2** that conducts pairing of the up-beat frequency and the down-beat frequency at specified sampling intervals, a target-object detecting section **3** that detects target objects around the vehicle, obtaining a distance from the vehicle to the target object and a relative speed between the vehicle and the target object based on the up-beat frequency and down-beat frequency that are paired, and a prediction processing section **4** that obtains a prediction data for each target object for a next sampling timing. The pairing processing section **2** conducts the pairing with priority to a specified target object that has a high certainty of the prediction data. Thereby, the pairing of the up-beat and down-beat frequencies can be conducted precisely and quickly.

The present invention should not be limited to the above-described embodiments, but any other modifications and improvements of the present invention can be applied. For example, the target objects having the prediction data may be divided into three classes instead of the above-described case in which there are provided two classes of the high and low certainty classes.

**Claims**

1. An obstacle detecting apparatus for a vehicle, comprising:

   a radar device (**1**) to transmit a frequency modulation-continuous wave and output an up-beat frequency and a down-beat frequency, the up-beat frequency being a difference between a transmitting frequency and a receiving frequency in a going-up section of the transmitting frequency by a frequency modulation, the down-beat frequency being a difference between the transmitting frequency and the receiving frequency in a going-down section of the transmitting frequency by the frequency modulation;
   a pairing device (**2**) to conduct pairing of the up-beat frequency and the down-beat frequency at specified sampling intervals;
   a target-object detecting device (**3**) to detect target objects around the vehicle, obtaining a distance from the vehicle to the target object and a relative speed between the vehicle and the target object based on the up-beat frequency and the down-beat frequency that are paired; and
   a predicting device (**4**) to obtain a prediction data for each target object for a next sampling timing,

   wherein said pairing device (**2**) is configured to conduct the pairing with priority to a specified target object that has a high certainty of the prediction data obtained by said predicting device (**4**).

2. The obstacle detecting apparatus for a vehicle of claim 1, wherein said pairing device (**2**) is configured to divide the target objects into a high class in which the target object has a relatively high certainty of the prediction data and a low class in which the target object has a relatively low certainty of the prediction data, conduct the pairing to the target object in said high class first, and then conduct the pairing to the target object in said low class by selecting the up-beat frequency and the down-beat frequency that are not paired yet.

3. The obstacle detecting apparatus for a vehicle of any one of the preceding claims, wherein said pairing device (**2**) is configured to divide the target objects into classes based on the number of sampling in which the target object that is actually detected substantially corresponds to the prediction data.

4. The obstacle detecting apparatus for a vehicle of any one of the preceding claims, wherein said pairing device (**2**) is configured to conduct the pairing to the target objects having the prediction data by selecting the up-beat frequency and the down-beat frequency that provide the highest correspondence of the target object to the prediction data.

5. The obstacle detecting apparatus of a vehicle of any one of the preceding claims, wherein the prediction data obtained by said predicting device (**4**) includes a distance from the vehicle to the target object and a relative speed between the vehicle and the target object for the next sampling timing.

6. The obstacle detecting apparatus for a vehicle of any one of the preceding claims, wherein said pairing device (**2**) is configured to conduct the pairing to the target object having the prediction data first and then conduct the pairing to a new target object by selecting the up-beat frequency and down-beat frequency that are not paired yet.

7. The obstacle detecting apparatus for a vehicle of claim 6, wherein said pairing device (**2**) is configured to conduct the pairing to the new target object based on a receiving direction and a receiving intensity of respective receiving waves of the up-beat frequency and the down-beat frequency.

8. An obstacle detecting method for a vehicle, comprising the steps of:

transmitting a frequency modulation-continuous wave and obtaining an up-beat frequency and a down-beat frequency, the up-beat frequency being a difference between a transmitting frequency and a receiving frequency in a going-up section of the transmitting frequency by a frequency modulation, the down-beat frequency being a difference between the transmitting frequency and the receiving frequency in a going-down section of the transmitting frequency by the frequency modulation;
conducting pairing of the up-beat frequency and the down-beat frequency at specified sampling intervals;
detecting target objects around the vehicle, by obtaining a distance from the vehicle to the target object and a relative speed between the vehicle and the target object based on the up-beat frequency and down-beat frequency that are paired; and
obtaining a prediction data for each target object for a next sampling timing,

wherein said pairing conducted is configured to be done by conducting the pairing with priority to a specified target object that has a high certainty of the prediction data obtained.

9. The obstacle detecting method for a vehicle of claim 8, wherein the conducting of pairing comprises dividing the target objects into a high class in which the target object has a relatively high certainty of the prediction data and a low class in which the target object has a relatively low certainty of the prediction data, conduct the pairing to the target object in said high class first, and then conduct the pairing to the target object in said low class by selecting the up-beat frequency and the down-beat frequency that are not paired yet, and/or wherein the conducting of pairing comprises dividing the target objects into classes based on the number of sampling in which the target object that is actually detected substantially corresponds to the prediction data.

10. A computer program product comprising computer-readable instructions which, when loaded and executed on a suitable system, perform the steps of an obstacle detecting method for a vehicle of claim 7 or 8.

# FIG. 1

```
                                    ┌─────────────────────────────────┐  4
                                    │  Prediction processing Section  │ ⌇
                                    └─────────────────────────────────┘
                                         ↕                    ↕
Transmitting  ◄ - - - - -    ┌──────────┐    ┌──────────┐    ┌──────────┐
   Wave                      │  Radar   │    │ Pairing  │    │Target-Object│
Receiving     - - - - - ►    │  Device  │──► │Processing│──► │ Detecting │ ──►
   Wave                      │          │    │ Section  │    │  Section  │
                             └──────────┘    └──────────┘    └──────────┘
                                  ⌇               ⌇               ⌇
                                  1               2               3
```

FIG. 2A

FIG. 2B

FIG. 3A

FIG. 3B

FIG. 3C

**FIG. 4**

START

Pairing Processing
of Target Objects in High Certainty Class   S1

Pairing Processing
of Target Objects in Low Certainty Class   S2

Pairing Processing
to New Target Objects   S3

END

## FIG. 5

START

Calculate
Correspondence Degree of Target Objects
in High Certainty Class to Prediction Data
for All Data of Beat Frequencies — S11

All of Beat
Frequency Data
are paired? — S12 No

Yes

Correspondence Degree
of All of Target Objects in
High Certainty Class are
calculated? — S13 No

Yes

Conduct
Pairing of Beat Frequency Data with the
Highest Correspondence Degree to Each
Target Object in High Certainty Class — S14

END

## FIG. 6A    Sampling Data

**Up-Beat Side**                                    **Provisional Pairing**

| | Up-Beat Frequency | Receiving Power | Angle | Down Side Pair | Distance | Speed |
|---|---|---|---|---|---|---|
| 1 | f1a | : | : | 1 | : | : |
| 2 | f2a | : | : | : | : | : |
| ③ | f3a | : | : | 2 | : | : |
| ⋮ | ⋮ | : | : | ⋮ | : | : |
| 20 | f20a | : | : | : | : | : |

**Down-Beat Side**

| | Down-Beat Frequency | Receiving Power | Angle |
|---|---|---|---|
| 1 | f1b | : | : |
| ② | f2b | : | : |
| 3 | f3b | : | : |
| ⋮ | ⋮ | : | : |
| 20 | f20b | : | : |

## FIG. 6B    Prediction Data

| ID | Distance | Speed | Angle | Receiving Power | Up-Beat Frequency | Down-Beat 引波数 |
|---|---|---|---|---|---|---|
| 1 | : | : | : | : | f1a' | f1b' |
| ② | : | : | : | : | f3a' | f2b' |
| 3 | : | : | : | : | : | : |
| ⋮ | : | : | : | : | : | : |
| 20 | : | : | : | : | : | : |

EP 1 906 206 A1

**FIG. 7**

Pairing Data for Target Objects
in High Certainty Class

Paring Data for Target Objects in
Low Certainty Class

Pairing Data for New Target
Objects

Up-Beat ID

| f1a | |
| f2a | |
| f3a | |
| f4a | |
| f5a | |
| f6a | |
| f7a | |
| f8a | |
| f9a | |
| f10a | |
| f11a | |
| f20a | |

Up-Beat ID

| | 1 |
| f2a | |
| | 2 |
| f4a | |
| f5a | |
| | 3 |
| f7a | |
| f8a | |
| f9a | |
| | 4 |
| f11a | |
| f20a | |

Up-Beat ID

| | 1 |
| | 5 |
| | 2 |
| f4a | |
| | 6 |
| | 3 |
| | 7 |
| f8a | |
| | 8 |
| | 4 |
| f11a | |
| f20a | |

Pairing
of Target
Objects in
High
Certainty
Class

S1

Pairing
of Target
Objects in
Low
Certainty
Class

S2

Pairing
of New
Target
Objects

S3

Down-Beat ID

| f1b | |
| f2b | |
| f3b | |
| f4b | |
| f5b | |
| f6b | |
| f7b | |
| f8b | |
| f9b | |
| f10b | |
| f11b | |
| f20b | |

Down-Beat ID

| | 1 |
| | 2 |
| f3b | |
| | 3 |
| f5b | |
| f6b | |
| f7b | |
| f8b | |
| f9b | |
| | 4 |
| f11b | |
| f20b | |

Down-Beat ID

| | 1 |
| | 2 |
| | 5 |
| | 3 |
| f5b | |
| | 6 |
| | 7 |
| f8b | |
| | 8 |
| | 4 |
| f11b | |
| f20b | |

**FIG. 8**

$$\text{START}$$

Calculate
Correspondence Degree of Target Objects
in Low Certainty Class to Prediction Data
for the Rest of Data of Beat Frequencies — S21

All of the Rest of Beat
Frequency Data
are paired? — S22

No

Yes

Correspondence Degree
of All of Target Objects in
Low Certainty Class are
calculated? — S23

No

Yes

Conduct
Pairing of Beat Frequency Data with the
Highest Correspondence Degree to Each
Target Object in Low Certainty Class — S24

$$\text{END}$$

**FIG. 9**

```
         ┌─────────────┐
         │    START    │
         └─────────────┘
                │
                ▼
┌──────────────────────────────────────┐
│              Calculate               │
│  Correspondence Degree of Angle and  │      S31
│  Intensity of Receiving Wave to Up-Beat│
│  and Down-Beat Frequencies for the Rest of│
│        Data of Beat Frequencies      │
└──────────────────────────────────────┘
                │
                ▼
         ╱─────────────╲                      S32
        ╱ All of the Rest of Beat╲
       ╱   Frequency Data         ╲─────── No
       ╲      are paired?         ╱
        ╲                        ╱
         ╲─────────────╱
                │ Yes
                ▼
┌──────────────────────────────────────┐
│              Conduct                 │      S33
│  Pairing of Beat Frequencies with the│
│     Highest Correspondence Degree    │
└──────────────────────────────────────┘
                │
                ▼
         ┌─────────────┐
         │     END     │
         └─────────────┘
```

**European Patent Office**

**EUROPEAN SEARCH REPORT**

Application Number

EP 07 01 8383

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 283 631 A (ROKE MANOR RESEARCH [GB]) 10 May 1995 (1995-05-10) | 1,2,4-6, 8-10 | INV. G01S13/58 |
| Y | * pages 8-9; figures 1,2 * | 3,7,9 | G01S13/72 G01S13/34 |
| Y | EP 1 347 306 A (FUJITSU TEN LTD [JP]) 24 September 2003 (2003-09-24) * paragraphs [0048] - [0056], [0090] - [0097]; figures 2-7,14 * | 3,9 | G01S13/93 |
| Y | EP 1 319 961 A (MURATA MANUFACTURING CO [JP]) 18 June 2003 (2003-06-18) * paragraphs [0016], [0022], [0026], [0027], [0037], [0059] - [0061]; figures 1,2,7A,7B,8A,8B,11 * | 7 | |
| Y | EP 0 981 059 A (TOYOTA MOTOR CO LTD [JP]) 23 February 2000 (2000-02-23) * paragraphs [0052] - [0062], [0068]; figures 1,2,3A,3B,5A,5B * | 7 | |
| A | US 5 619 208 A (TAMATSU YUKIMASA [JP] ET AL) 8 April 1997 (1997-04-08) * the whole document * | 1-10 | TECHNICAL FIELDS SEARCHED (IPC) |
| A | EP 0 932 052 A (HONDA MOTOR CO LTD [JP]) 28 July 1999 (1999-07-28) * the whole document * | | G01S |
| A,D | JP 2004 198438 A (FUJITSU TEN LTD) 15 July 2004 (2004-07-15) * the whole document * | | |

The present search report has been drawn up for all claims

| Place of search | Date of completion of the search | Examiner |
|---|---|---|
| Munich | 8 November 2007 | Schmelz, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

## ANNEX TO THE EUROPEAN SEARCH REPORT
## ON EUROPEAN PATENT APPLICATION NO.

EP 07 01 8383

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2007

| Patent document cited in search report | | Publication date | Patent family member(s) | | Publication date |
|---|---|---|---|---|---|
| GB 2283631 | A | 10-05-1995 | CA | 2175836 A1 | 11-05-1995 |
| | | | DE | 59406787 D1 | 01-10-1998 |
| | | | WO | 9512824 A1 | 11-05-1995 |
| | | | EP | 0727051 A1 | 21-08-1996 |
| | | | JP | 9504612 T | 06-05-1997 |
| | | | JP | 3487857 B2 | 19-01-2004 |
| | | | US | 5625362 A | 29-04-1997 |
| EP 1347306 | A | 24-09-2003 | NONE | | |
| EP 1319961 | A | 18-06-2003 | CN | 1450361 A | 22-10-2003 |
| | | | CN | 1932551 A | 21-03-2007 |
| | | | DE | 60202990 D1 | 24-03-2005 |
| | | | DE | 60202990 T2 | 13-04-2006 |
| | | | DE | 60208726 T2 | 13-07-2006 |
| | | | JP | 3729127 B2 | 21-12-2005 |
| | | | JP | 2003185738 A | 03-07-2003 |
| | | | KR | 20030051274 A | 25-06-2003 |
| | | | US | 2003117312 A1 | 26-06-2003 |
| EP 0981059 | A | 23-02-2000 | DE | 69923815 D1 | 31-03-2005 |
| | | | DE | 69923815 T2 | 13-04-2006 |
| | | | JP | 3480486 B2 | 22-12-2003 |
| | | | JP | 2000065921 A | 03-03-2000 |
| | | | KR | 20000017341 A | 25-03-2000 |
| | | | US | 6072422 A | 06-06-2000 |
| US 5619208 | A | 08-04-1997 | DE | 19602437 A1 | 25-07-1996 |
| | | | JP | 3550829 B2 | 04-08-2004 |
| | | | JP | 8262130 A | 11-10-1996 |
| EP 0932052 | A | 28-07-1999 | JP | 2930236 B2 | 03-08-1999 |
| | | | JP | 11211811 A | 06-08-1999 |
| | | | US | 6140954 A | 31-10-2000 |
| JP 2004198438 | A | 15-07-2004 | JP | 3761888 B2 | 29-03-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004198438 A